# EUROPEAN PATENT APPLICATION

(11) **EP 4 556 158 A1**
(43) Date of publication of application: **21.05.2025**
(21) Application number: 24195144.1
(22) Date of filing: 19.08.2024
(51) Int. Cl.: B23Q 3/08, B25B 11/00, B25B 5/14

(54) **FIXING DEVICE**

(30) Priority: 21.08.2023 CN 202322253097 U
(71) Applicant: Tyco Electronics (Shanghai) Co., Ltd., Pilot Free Trade Zone Shanghai 200131 (CN)
(72) Inventor: Meng, Qiao, Shanghai, 200233 (CN); Zhang, Shen, Shanghai, 200233 (CN)
(74) Representative: Grünecker Patent- und Rechtsanwälte PartG mbB

(57) **Abstract**

The present invention discloses a fixing device for a fixing flexible flat piece. The fixing device comprises of a support platform (1) for supporting the flexible flat piece (7); and a fixture (2) for clamping the flexible flat piece (7) onto the support platform (1). A vacuum chamber (10) is formed in the support platform (1), and multiple vacuum suction holes (11) are formed in the top wall of the vacuum chamber (10); the vacuum suction holes (11) are used to adsorb the flexible flat piece (7) on the top surface of the support platform (1) to prevent the flexible flat piece (7) from being moved during it is clamped by the fixture (2). In the present invention, the flexible flat piece is vacuum adsorbed on the top surface of the support platform. Therefore, the flexible flat piece will not move, wrinkle, warp or deflect during the clamping process, making the clamping operation of the flexible flat piece very simple and easy, which can greatly improve the clamping efficiency.

## Description

### CROSS-REFERENCE TO RELATED APPLICATION

This application claims the benefit of Chinese Patent Application No. CN202322253097.4 filed on August 21, 2023 in the State Intellectual Property Office of China, the whole disclosure of which is incorporated herein by reference.

### BACKGROUND OF THE INVENTION

### Field of the Invention

The present invention relates to a fixing device, in particular to a fixing device suitable for fixing a flexible flat piece.

### Description of the Related Art

In the prior art, before crimping the terminals onto a flexible flat cable (FFC) or a flexible printed circuit board (FPC), it is necessary to first clamp and secure the flexible flat cable or the flexible printed circuit board with a fixture. However, during the process of closing the fixture, the flexible flat cable or the flexible printed circuit board are prone to movement. Therefore, in the prior art, it is necessary to hold the flexible flat cable or the flexible printed circuit board with human hands to prevent the flexible flat cable or the flexible printed circuit board from being moved during the clamping process. In addition, due to the flexibility of flexible flat cable or the flexible printed circuit board, wrinkles, warping, or deflection are also prone to occur during the clamping process, which may require readjustment and replacement of the flexible flat cable or the flexible printed circuit board.

### SUMMARY OF THE INVENTION

The present invention has been made to overcome or alleviate at least one aspect of the above mentioned disadvantages.

According to an aspect of the present invention, there is provided a fixing device for fixing a flexible flat piece. The fixing device comprises of a support platform for supporting the flexible flat piece; and a fixture for clamping the flexible flat piece onto the support platform. A vacuum chamber is formed in the support platform, and multiple vacuum suction holes are formed in the top wall of the vacuum chamber; the vacuum suction holes are used to adsorb the flexible flat piece on the top surface of the support platform to prevent the flexible flat piece from being moved during it is clamped by the fixture.

According to an exemplary embodiment of the present invention, the fixing device further comprises a connecting pipe which is connected to the support platform and communicated with the vacuum chamber.

According to another exemplary embodiment of the present invention, multiple vacuum chambers are formed in the support platform, and the multiple vacuum chambers are separated from each other; the fixing device comprises multiple connecting pipes, which are respectively connected to the multiple vacuum chambers.

According to another exemplary embodiment of the present invention, multiple vacuum suction holes on the top wall of the vacuum chamber are arranged in an array with multi rows and multi columns.

According to another exemplary embodiment of the present invention, the fixing device further comprises a vacuum generating device which is connected to the connecting pipe for generating negative pressure in the vacuum chamber.

According to another exemplary embodiment of the present invention, the vacuum generating device is a vacuum pump or a vacuum generator.

According to another exemplary embodiment of the present invention, the fixture is rotatably installed on the support platform and can be rotated relative to the support platform between a closed position of clamping the flexible flat piece and an opened position of releasing the flexible flat piece.

According to another exemplary embodiment of the present invention, the fixing device further comprises a locking device which is installed on the support platform to lock the fixture in the closed position to prevent accidental opening of the fixture.

According to another exemplary embodiment of the present invention, the fixture comprises of a pressing plate having two opposite ends in a first horizontal direction; and the pair of rotating arms which are respectively fixed to both ends of the pressing plate. The rotating arm is rotatably connected to the support platform, allowing the pressing plate to be rotated between the closed position and the opened position; when the pressing plate is rotated to the closed position, the flexible flat piece is clamped between the bottom surface of the pressing plate and the top surface of the support platform.

According to another exemplary embodiment of the present invention, the fixture further includes a handle which is connected to the pressing plate, so that the fixture can be rotated between the closed position and the opened position by operating the handle.

According to another exemplary embodiment of the present invention, the fixing device further comprises a pair of mounting plates which are respectively fixed to the opposite ends of the support platform in the first horizontal direction, the fixture further comprises the pair of mounting shafts, which are respectively fixed to the pair of rotating arms, a mounting hole is formed in the mounting plate, the mounting shaft is rotatably fitted in the mounting hole, and the axis of the mounting shaft and the mounting hole extends along the first horizontal direction.

According to another exemplary embodiment of the present invention, a locking hole is formed in the rotating arm of the fixture. The locking device comprises of: a locking pin adapted to be moved between a locking position engaged with the locking hole and an unlocking position separated from the locking hole; and a driver for driving the locking pin to move between the locking position and the unlocking position. When the fixture is rotated to the closed position and the locking pin is moved to the locking position, the locking pin is engaged in the locking hole to lock the fixture in the closed position.

According to another exemplary embodiment of the present invention, the fixing device further comprises a pair of mounting brackets which are respectively fixed to the pair of mounting plates, the fixing device comprises a pair of locking devices, and the drivers of the locking devices are respectively installed on the pair of mounting brackets.

According to another exemplary embodiment of the present invention, the driver is a cylinder, and the telescopic rod of the cylinder is connected to the locking pin for driving the locking pin to move between the locking position and the unlocking position.

According to another exemplary embodiment of the present invention, the fixing device further comprises a frame for installing and supporting the support platform, the frame includes a horizontal top plate, and the support platform is movably installed on the horizontal top plate to be able to move along a second horizontal direction perpendicular to the first horizontal direction.

According to another exemplary embodiment of the present invention, the fixing device further comprises of a sliding rail which is fixed to the top surface of the horizontal top plate and extends along the second horizontal direction; and a slider which is fixed to the bottom surface of the support platform and slidably mated with the slide rail. The support platform as well as the fixture and locking device installed on the support platform can be moved together along the sliding rail.

According to another exemplary embodiment of the present invention, the fixing device further comprises of a driving device installed on the horizontal top plate; and a transmission mechanism which is connected between the driving device and the support platform. The driving device is used to drive the support platform to move along the sliding rail.

According to another exemplary embodiment of the present invention, the transmission mechanism comprises of a rack which is fixed to the bottom surface of the support platform; and a gear which is rotatably installed on the horizontal top plate and is meshed with the rack. The driving device is a motor, and the output shaft of the motor is connected to the gear for driving the gear to rotate.

According to another exemplary embodiment of the present invention, the vacuum generating device is installed on the bottom surface of the horizontal top plate of the frame.

In the aforementioned exemplary embodiments of the present invention, the flexible flat piece is vacuum adsorbed on the top surface of the support platform. Therefore, the flexible flat piece will not move, wrinkle, warp or deflect during the clamping process, making the clamping operation of the flexible flat piece very simple and easy, which can greatly improve the clamping efficiency.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a fixing device according to an exemplary embodiment of the present invention when viewed from the front side;
Figure 2 shows an illustrative perspective view of a fixing device according to an exemplary embodiment of the present invention when viewed from the rear side;
Figure 3 shows an illustrative exploded view of a fixing device according to an exemplary embodiment of the present invention;
Figure 4 shows a cross-sectional view of a fixing device according to an exemplary embodiment of the present invention;
Figure 5 shows an illustrative perspective view of a fixing device according to an exemplary embodiment of the present invention, wherein the flexible flat piece is vacuum adsorbed onto the top surface of the support platform;
Figure 6 shows a cross-sectional view of a fixing device according to an exemplary embodiment of the present invention, wherein the flexible flat piece is vacuum adsorbed onto the top surface of the support platform; and
Figure 7 shows a longitudinal sectional view of a fixing device according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to an aspect of the present invention, there is provided a fixing device for fixing a flexible flat piece. The fixing device comprises of: a support platform for supporting the flexible flat piece; and a fixture for clamping the flexible flat piece onto the support platform. A vacuum chamber is formed in the support platform, and multiple vacuum suction holes are formed in the top wall of the vacuum chamber; the vacuum suction holes are used to adsorb the flexible flat piece on the top surface of the support platform to prevent the flexible flat piece from being moved during it is clamped by the fixture.

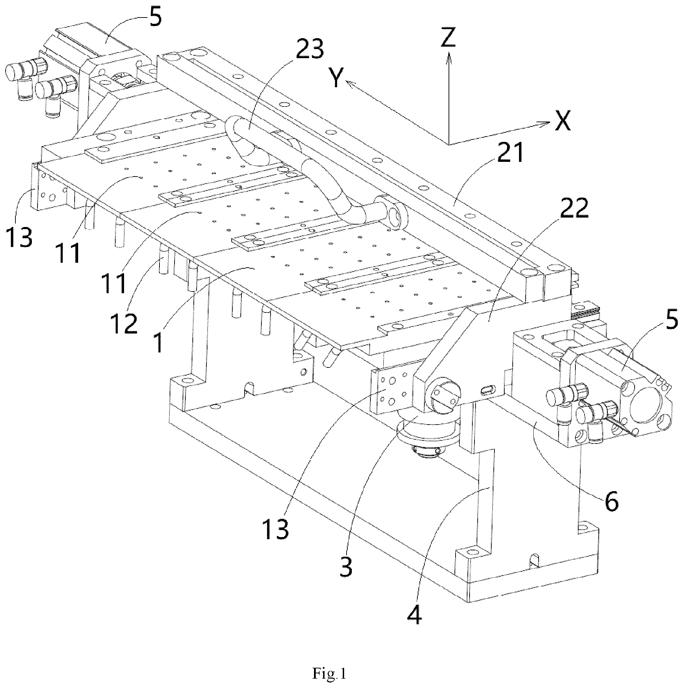

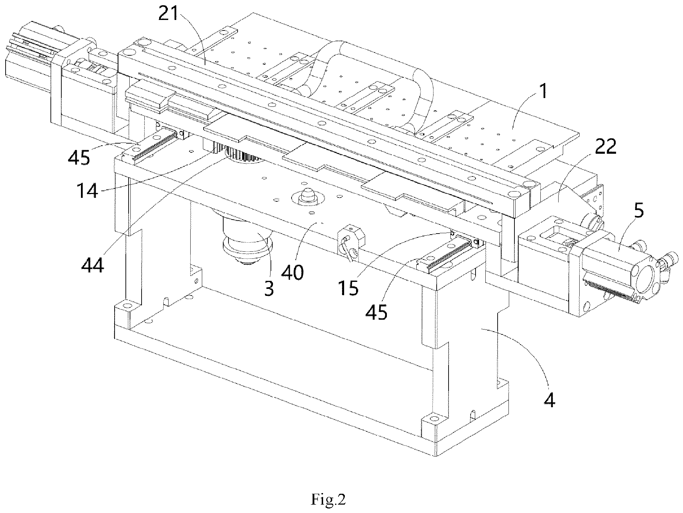

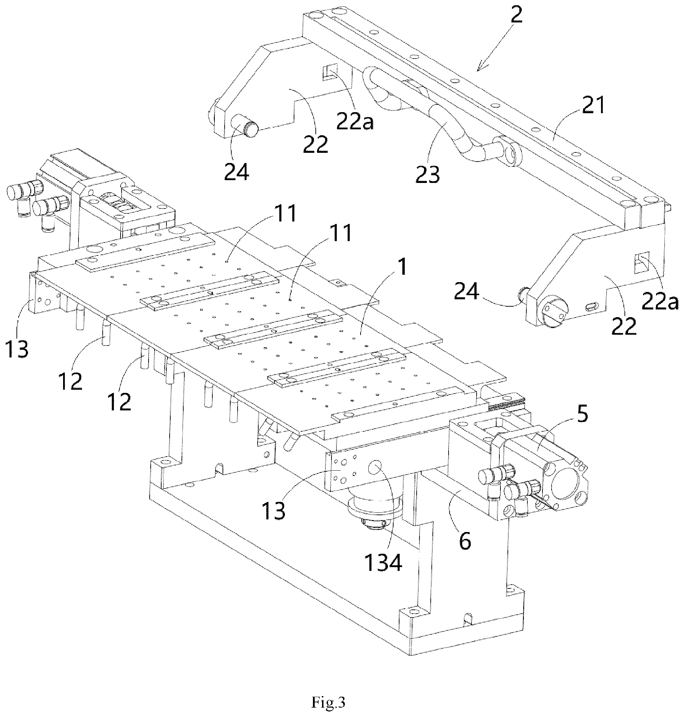

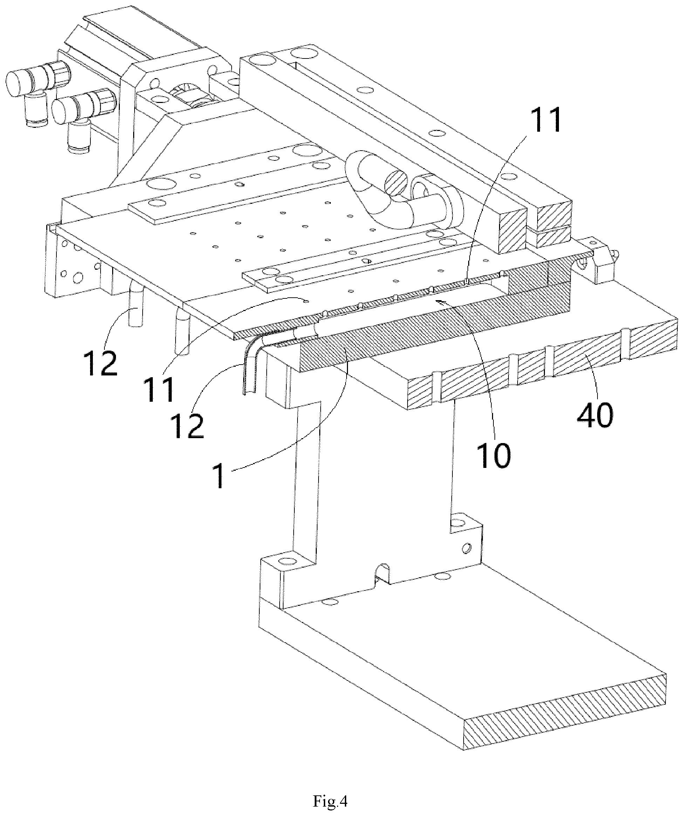

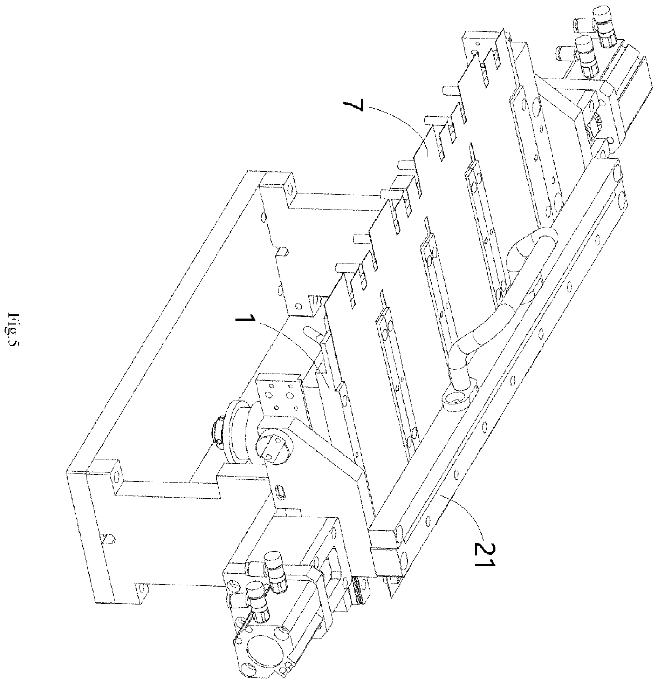

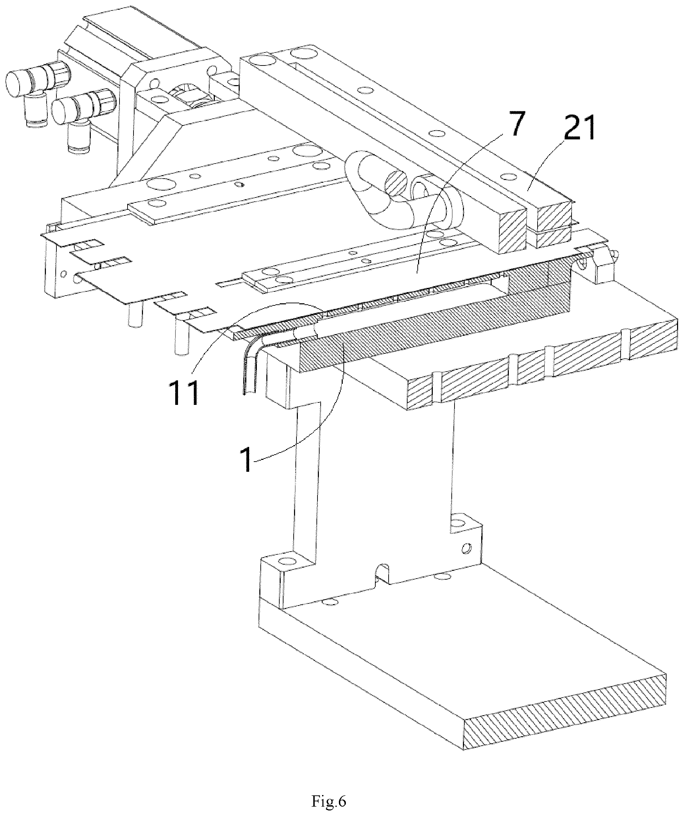

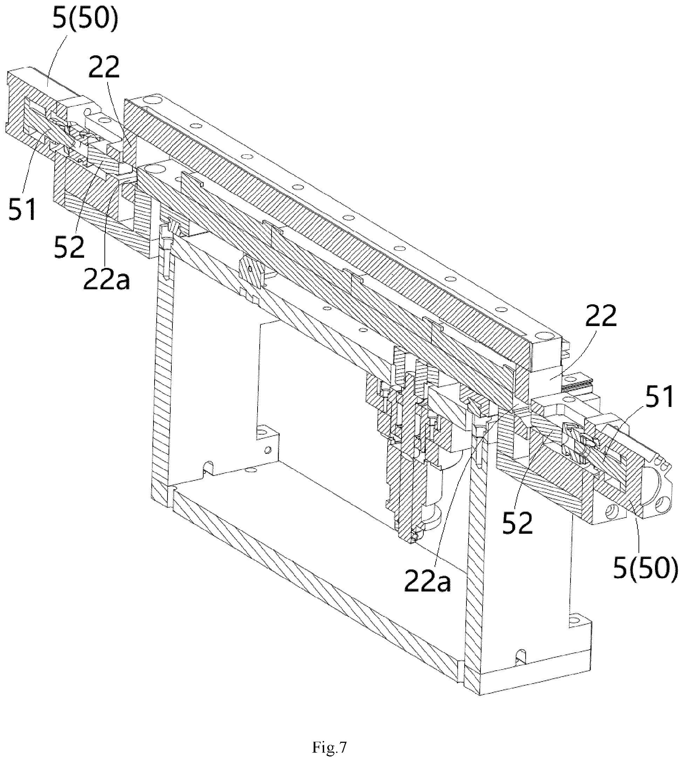

Figure 1 shows an illustrative perspective view of a fixing device according to an exemplary embodiment of the present invention when viewed from the front side; Figure 2 shows an illustrative perspective view of a fixing device according to an exemplary embodiment of the present invention when viewed from the rear side; Figure 3 shows an illustrative exploded view of a fixing device according to an exemplary embodiment of the present invention; Figure 4 shows a cross-sectional view of a fixing device according to an exemplary embodiment of the present invention; Figure 5 shows an illustrative perspective view of a fixing device according to an exemplary embodiment of the present invention, wherein the flexible flat piece 7 is vacuum adsorbed onto the top surface of the support platform 1; Figure 6 shows a cross-sectional view of a fixing device according to an exemplary embodiment of the present invention, wherein the flexible flat piece 7 is vacuum adsorbed onto the top surface of the support platform 1; Figure 7 shows a longitudinal sectional view of a fixing device according to an exemplary embodiment of the present invention.

As shown in Figures 1 to 7, in an exemplary embodiment of the present invention, a fixing device for fixing a flexible flat piece 7 is disclosed. The flexible flat piece 7 can be a flexible flat cable or a flexible printed circuit board. The fixing device includes: a support platform 1 and a fixture 2. The support platform 1 is used to support the flexible flat piece 7. The fixture 2 is used to clamp the flexible flat piece 7 onto the support platform 1. In the illustrated embodiment, a vacuum chamber 10 is formed in the support platform 1, and multiple vacuum suction holes 11 are formed in the top wall of the vacuum chamber 10. The vacuum suction holes 11 are used to adsorb the flexible flat piece 7 on the top surface of the support platform 1 to prevent the flexible flat piece 7 from being moved during it is clamped by the fixture 2.

As shown in Figures 1 to 7, in the illustrated embodiments, the fixing device further comprises a connecting pipe 12, which is connected to the support platform 1 and communicated with the vacuum chamber 10.

As shown in Figures 1 to 7, in the illustrated embodiment, multiple vacuum chambers 10 are formed in the support platform 1, and the multiple vacuum chambers 10 are separated from each other. The fixing device includes multiple connecting pipes 12, which are respectively connected to multiple vacuum chambers 10.

As shown in Figures 1 to 7, in the illustrated embodiments, multiple vacuum suction holes 11 on the top wall of the vacuum chamber 10 are arranged in an array with multi rows and multi columns. The arrangement density of vacuum suction holes 11 can be set according to actual needs.

As shown in Figures 1 to 7, in the illustrated embodiments, the fixing device further comprises a vacuum generating device 3, which is connected to the connecting pipe 12 for generating negative pressure in the vacuum chamber 10. The vacuum generating device 3 can be a vacuum pump or a vacuum generator.

As shown in Figures 1 to 7, in the illustrated embodiments, the fixture 2 is rotatably installed on the support platform 1 and can be rotated relative to the support platform 1 between a closed position of clamping the flexible flat piece 7 and an opened position of releasing the flexible flat piece 7.

As shown in Figures 1 to 7, in the illustrated embodiments, the fixing device further includes a locking device 5, which is installed on the support platform 1 to lock fixture 2 in the closed position to prevent accidental opening of the fixture 2.

As shown in Figures 1 to 7, in the illustrated embodiment, the fixture 2 comprises a pressing plate 21 and a pair of rotating arms 22. The pressing plate 21 has two opposite ends in the first horizontal direction Y. The pair of rotating arms 22 are respectively fixed to both ends of pressing plate 21. The rotating arm 22 is rotatably connected to the support platform 1, allowing the pressing plate 21 to be rotated between the closed and opened positions. When the pressing plate 21 is rotated to the closed position, the flexible flat piece 7 is clamped between the bottom surface of the pressing plate 21 and the top surface of the support platform 1.

As shown in Figures 1 to 7, in the illustrated embodiments, the fixture 2 further includes a handle 23, which is connected to the pressing plate 21, so that the fixture 2 can be rotated between the closed and open positions by operating the handle 23.

As shown in Figures 1 to 7, in the illustrated embodiments, the fixing device further comprises a pair of mounting plates 13, which are respectively fixed to the opposite ends of the support platform 1 in the first horizontal direction Y. The fixture 2 also includes a pair of mounting shafts 24. The pair of mounting shafts 24 are respectively fixed to the pair of rotating arms 22. A mounting hole 134 is formed in the mounting plate 13, and the mounting shaft 24 is rotatably fitted in the mounting hole 134. The axis of the mounting shaft 24 and the mounting hole 134 extends along the first horizontal direction Y.

As shown in Figures 1 to 7, in the illustrated embodiment, a locking hole 22a is formed in the rotating arm 22 of the fixture 2. The locking device 5 includes a locking pin 52 and a driver 50. The locking pin 52 is adapted to be moved between a locking position engaged with the locking hole 22a and an unlocking position separated from the locking hole 22a. The driver 50 is used to drive the locking pin 52 to move between the locking and unlocking positions. When the fixture 2 is rotated to the closed position and the locking pin 52 is moved to the locking position, the locking pin 52 is engaged with the locking hole 22a to lock fixture 2 in the closed position.

As shown in Figures 1 to 7, in the illustrated embodiments, the fixing device further comprises a pair of mounting brackets 6, which are respectively fixed to the pair of mounting plates 13. The fixing device includes a pair of locking devices 5, and the drivers 50 of the pair of locking devices 5 are respectively installed on the pair of mounting brackets 6.

As shown in Figures 1 to 7, in the illustrated embodiments, the driver 50 is a cylinder 50, and the telescopic rod 51 of the cylinder 50 is connected to the locking pin 52 for driving the locking pin 52 to move between the locking position and the unlocking position. However, the present invention is not limited to the illustrated embodiments, and the driver 50 can also be a hydraulic cylinder or an electromagnetic device.

As shown in Figures 1 to 7, in the illustrated embodiments, the fixing device further comprises a frame 4 for installing and supporting the aforementioned support platform 1. The frame 4 includes a horizontal top plate 40, and the support platform 1 is movably installed on the horizontal top plate 40 to be able to move along a second horizontal direction X perpendicular to the first horizontal direction Y.

As shown in Figures 1 to 7, in the illustrated embodiments, the fixing device further comprises a slide rail 45 and a slider 15. The slide rail 45 is fixed to the top surface of the horizontal top plate 40 and extends along the second horizontal direction X. The slider 15 is fixed to the bottom surface of the support platform 1 and slidably mated with the slide rail 45. The support platform 1, as well as the fixture 2 and locking device 5 installed on the support platform 1, can move together along the slide rail 45.

As shown in Figures 1 to 7, in the illustrated embodiments, the fixing device further comprises a driving device (not shown) and a transmission mechanism 14, 44. The driving device is installed onto the horizontal top plate 40. The transmission mechanism 14, 44 is connected between the driving device and the support platform 1. The driving device is used to drive the support platform 1 to move along the slide rail 45.

As shown in Figures 1 to 7, in the illustrated embodiments, the transmission mechanism 14 and 44 includes: a rack 14 and a gear 44. The rack 14 is fixed to the bottom surface of the support platform 1. The gear 44 is rotatably installed on the horizontal top plate 40 and meshed with the rack 14. The driving device is a motor, and the output shaft of the motor is connected to the gear 44 for driving the gear 44 to rotate.

As shown in Figures 1 to 7, in the illustrated embodiments, the vacuum generating device 3 is installed on the bottom surface of the horizontal top plate 40 of the frame 4.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A fixing device for fixing a flexible flat piece (7), wherein the fixing device comprises of
a support platform (1) for supporting the flexible flat piece (7); and
a fixture (2) for clamping the flexible flat piece (7) onto the support platform (1),
wherein a vacuum chamber (10) is formed in the support platform (1), and multiple vacuum suction holes (11) are formed in the top wall of the vacuum chamber (10),
wherein the vacuum suction holes (11) are used to adsorb the flexible flat piece (7) on the top surface of the support platform (1) to prevent the flexible flat piece (7) from being moved during it is clamped by the fixture (2).

2. The fixing device according to claim 1, further comprising:
a connecting pipe (12) which is connected to the support platform (1) and communicated with the vacuum chamber (10).

3. The fixing device according to claim 2,
wherein multiple vacuum chambers (10) are formed in the support platform (1), and the multiple vacuum chambers (10) are separated from each other;
wherein the fixing device comprises multiple connecting pipes (12), which are respectively connected to the multiple vacuum chambers (10).

4. The fixing device according to claim 2,
wherein multiple vacuum suction holes (11) on the top wall of the vacuum chamber (10) are arranged in an array with multi rows and multi columns.

5. The fixing device according to claim 2, further comprising:
a vacuum generating device (3) which is connected to the connecting pipe (12) for generating negative pressure in the vacuum chamber (10),
wherein the vacuum generating device (3) is a vacuum pump or a vacuum generator.

6. The fixing device according to claim 5,
wherein the fixture (2) is rotatably installed on the support platform (1) and can be rotated relative to the support platform (1) between a closed position of clamping the flexible flat piece (7) and an opened position of releasing the flexible flat piece (7).

7. The fixing device according to claim 6, further comprising:
a locking device (5) which is installed on the support platform (1) to lock the fixture (2) in the closed position to prevent accidental opening of the fixture (2).

8. The fixing device according to claim 7,
wherein the fixture (2) comprises of:
a pressing plate (21) having two opposite ends in a first horizontal direction (Y); and
the pair of rotating arms (22) which are respectively fixed to both ends of the pressing plate (21),
wherein the rotating arm (22) is rotatably connected to the support platform (1), allowing the pressing plate (21) to be rotated between the closed position and the opened position,
wherein when the pressing plate (21) is rotated to the closed position, the flexible flat piece (7) is clamped between the bottom surface of the pressing plate (21) and the top surface of the support platform (1).

9. The fixing device according to claim 8,
wherein the fixture (2) further includes a handle (23) which is connected to the pressing plate (21), so that the fixture (2) can be rotated between the closed position and the opened position by operating the handle (23).

10. The fixing device according to claim 8, further comprising:
a pair of mounting plates (13) which are respectively fixed to the opposite ends of the support platform (1) in the first horizontal direction (Y),
wherein the fixture (2) further comprises the pair of mounting shafts (24), which are respectively fixed to the pair of rotating arms (22),
wherein a mounting hole (134) is formed in the mounting plate (13), the mounting shaft (24) is rotatably fitted in the mounting hole (134), and the axis of the mounting shaft (24) and the mounting hole (134) extends along the first horizontal direction (Y).

11. The fixing device according to claim 10,
wherein a locking hole (22a) is formed in the rotating arm (22) of the fixture (2),
wherein the locking device (5) comprises:
a locking pin (52) adapted to be moved between a locking position engaged with the locking hole (22a) and an unlocking position separated from the locking hole (22a); and
a driver (50) for driving the locking pin (52) to move between the locking position and the unlocking position,
wherein when the fixture (2) is rotated to the closed position and the locking pin (52) is moved to the locking position, the locking pin (52) is engaged in the locking hole (22a) to lock the fixture (2) in the closed position.

12. The fixing device according to claim 11, further comprising:
a pair of mounting brackets (6) which are respectively fixed to the pair of mounting plates (13),
wherein the fixing device comprises a pair of locking devices (5), and the drivers (50) of the locking devices (5) are respectively installed on the pair of mounting brackets (6),
wherein the driver (50) is a cylinder (50), and the telescopic rod (51) of the cylinder (50) is connected to the locking pin (52) for driving the locking pin (52) to move between the locking position and the unlocking position.

13. The fixing device according to claim 8, further comprises:
a frame (4) for installing and supporting the support platform (1),
wherein the frame (4) includes a horizontal top plate (40), and the support platform (1) is movably installed on the horizontal top plate (40) to be able to move along a second horizontal direction (X) perpendicular to the first horizontal direction (Y).

14. The fixing device according to claim 13, further comprising:
a sliding rail (45) which is fixed to the top surface of the horizontal top plate (40) and extends along the second horizontal direction (X); and
a slider (15) which is fixed to the bottom surface of the support platform (1) and slidably mated with the slide rail (45),
wherein the support platform (1) as well as the fixture (2) and locking device (5) installed on the support platform (1) can be moved together along the sliding rail (45).

15. The fixing device according to claim 14, further comprising:
a driving device installed on the horizontal top plate (40); and
a transmission mechanism (14, 44) which is connected between the driving device and the support platform (1),
wherein the driving device is used to drive the support platform (1) to move along the sliding rail (45),
wherein the transmission mechanism (14, 44) comprises of:
a rack (14) which is fixed to the bottom surface of the support platform (1); and
a gear (44) which is rotatably installed on the horizontal top plate (40) and is meshed with the rack (14),
wherein the driving device is a motor, and the output shaft of the motor is connected to the gear (44) for driving the gear (44) to rotate.
